# EUROPEAN PATENT SPECIFICATION

(11) **EP 2 575 384 B1**
(45) Date of publication and mention of the grant of the patent: **08.01.2014**
(21) Application number: 11183632.6
(22) Date of filing: 30.09.2011
(51) Int. Cl.: H04W 8/24, H04W 8/18, G06F 21/00

(54) **System and method for remote wipe through voice mail**
System und Verfahren zum entfernten Löschen mittels Sprachnachricht
Système et procédé pour le nettoyage à distance par messagerie vocale

(43) Date of publication of application: 03.04.2013
(73) Proprietor: BlackBerry Limited, Waterloo, ON N2K 0A7 (CA)
(72) Inventor: Walker, David Ryan, Waterloo, Ontario N2L 3W8 (CA); Fyke, Steven Henry, Waterloo, Ontario N2L 3W8 (CA)
(74) Representative: Moore, Barry

(56) References cited:
- EP-A1- 1 659 818
- WO-A1-2005/107282
- WO-A1-2011/091538
- US-A1- 2002 152 401
- US-A1- 2005 186 954
- US-A1- 2005 221 799
- US-A1- 2008 186 162
- US-A1- 2011 145 927

## Description

### FIELD OF THE DISCLOSURE

The present disclosure relates to mobile devices and in particular to security for mobile devices.

### BACKGROUND

One security feature on some mobile devices involves remotely wiping data and data connections from the device if the device is lost or stolen. This is typically done by an Information Technology (IT) Administrator for an enterprise using an enterprise server to send a remote wipe command from the enterprise server to the lost or stolen mobile device. The lost of stolen mobile device includes software or an application module which recognizes the remote wipe command and will proceed to remotely wipe the data and connections currently stored on the mobile device.

US 2011/145927 relates to an approach for remotely configuring a mobile device designated as missing.

US 2008/186162 relates to methods, systems, devices and computer program products for locating, tracking and/or recovering a wireless communication device that has been misplaced, lost or stolen.

EP 1 659 818 relates to a security system, which can protect information within a portable communication terminal (200) when the terminal is lost or stolen.

US 2005/186954 relates to systems and methods that employ various mechanisms to selectively disable mobile device functionality.

### SUMMARY

Accordingly, the present teaching provides a method for remotely wiping a mobile device in accordance with claim 1. Advantageous features are defined in the dependent claims.

Accordingly, the present teaching provides a system for remotely wiping a mobile device in accordance with claim 11.

Accordingly, the present teaching provides a telephonic server in accordance with claim 12.

### BRIEF DESCRIPTION OF THE DRAWINGS

The present disclosure will be better understood with reference to the drawings, in which:
**Figure 1** is a process diagram of a method in accordance with the present disclosure;
**Figure 2** is a block diagram of a simplified network architecture in accordance with one embodiment of the present disclosure;
**Figure 3** is a block diagram of a simplified network architecture in accordance with a further embodiment of the present disclosure; and
**Figure 4** is a block diagram of an example mobile device capable of being used with the present disclosure.

### DETAILED DESCRIPTION OF THE DRAWINGS

If a mobile device is lost or is stolen, a user may not know the appropriate number to call or how to initiate a remote wipe through an Information Technology department of the user's enterprise. Further, a remote wipe may not be possible through a carrier or service provider. In order to overcome the above limitations, a remote wipe feature may be made available by calling a number that a user would know.

One problem with remote wiping through an Information Technology department is that a user may not know the appropriate number to call to initiate the wipe. Typically, the mobile device may store a directory of relevant numbers and, if it is lost or stolen, the user may not have this directory. Further, it may be difficult or impossible to reach an Information Technology Administrator in the evening or on weekends to wipe the device and thus the remote wipe may need to wait until the next weekday, which may compromise data security.

Further, some mobile devices do not operate through an enterprise server and instead utilize a device server hosted by a carrier or service provider for data on the device. In this case, it may be impossible to start a remote wipe procedure on the device.

Thus, in one embodiment, the number called comprises the number of the lost device. Typically, a user will know his or her mobile phone number and in many networks this remote number provides access to the mobile user's voicemail directory.

In other embodiments, the user may call his or her work telephone number to access a corporate voicemail system. Similarly, in other embodiments there are telephone numbers that a user would typically know which may be used to access a directory and would be within the scope of the present disclosure.

A mobile device may be used for a variety of functions. Typically, mobile devices are no longer only used for accessing a cellular network for voice communications, but rather have been used as personal digital assistants, messaging devices, calendar devices, camera devices, gaming devices, e-reader devices, media player devices, web browser devices, , among others, and therefore store a variety of data. Content on the phone can include contacts, recent emails, memos, documents, financial records, among other data that may be considered to be sensitive by the user of the device. If a device is lost or stolen, such data may become compromised and one security feature possible is the capability of remotely wiping the mobile device.

Remotely wiping the device deletes data and also typically deletes contacts or connections to various email boxes to prevent future release of data onto the device. In one embodiment, a remote wipe will restore factory defaults onto the device and thus the device will have no data nor any connections to synchronize with any email boxes, calendars, memos, applications among other features.

In order to implement prior solutions, the IT Administrator needs to be contacted to send the kill packet.

According to the present disclosure, a wipe may be initiated by entering a known number and accessing a menu which would include the ability to wipe the device. In one embodiment, the number received may be the telephone number of the mobile device and the caller may thereby access the voicemail system for the mobile device. In other embodiments a text message could be sent to the voicemail server if the voicemail server supports such messaging. In this case the text message could include authentication information that the voicemail server could verify prior to wiping the device. In other embodiments, the text message with the wipe command could be sent to the device itself.

In other embodiments, other numbers may be used, including a business number to access a corporate voicemail system. This may be advantageous in cases where an enterprise server is used to manage the data on the device.

Other options for telephone numbers are within the scope of the present disclosure.

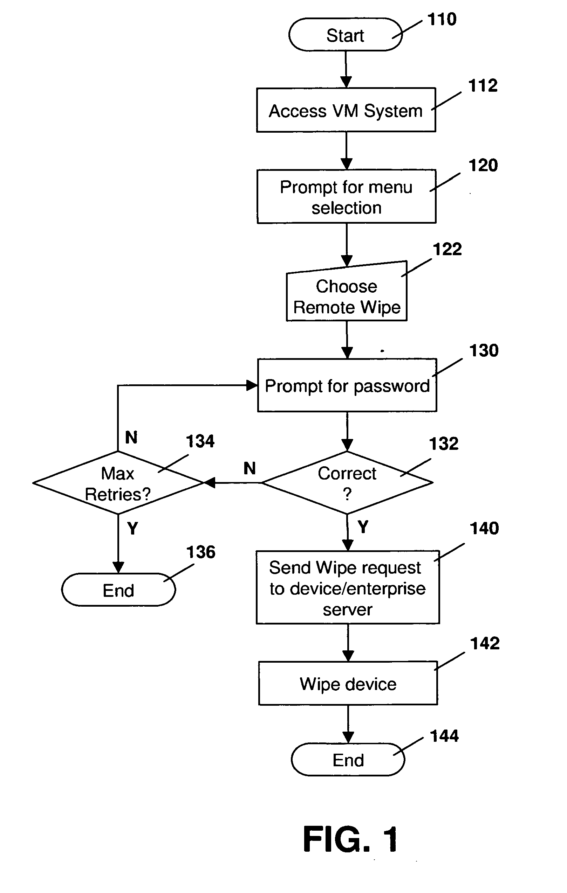

Reference is now made to **Figure 1**, which shows a process diagram that starts at block **110** and proceeds to block **112**. In block **112**, the user accesses a voicemail system. For example, many service providers allow the remote access of a voicemail system by connecting to a voicemail system by dialing a number of the device and then pressing a certain key such as the "*" key to access the voicemail system. A prompt may then be provided for a password to enter into the voicemail system.

Once the voicemail system for the device has been successfully accessed, the process proceeds to block **120** in which a menu selection is provided. This telephonic menu may provide prompts, for example, press "1" to listen to new messages, press "2" to change your administrative options, etc. In accordance with the present disclosure, a new menu item, such as "press 5" to remotely wipe your device, may be provided.

In some cases, the selection of the option to remotely wipe the device may provide a prompt for which device should be wiped if more than one device is registered with the voicemail. In other embodiments, the phone number used to access the voicemail system may relate to only one mobile device.

In block **122**, the remote wipe for the device is selected and the process proceeds to block **130**.

Block **130** is an optional block but may be used in many cases where an added layer of security may be desired. A prompt is provided for a confirmatory password in block **130** for remote wipe confirmation.

From block **130** the process proceeds to block **132** to check if the password entered at block **130** is correct. The check of block **132** may involve various processes. For example, a password may be set for remote wipe within the voicemail system. Alternately, the password for a remote wipe may be set on the device itself. Thus, the check of block **132** may query an enterprise server or device server to determine whether or not the password is correct. Alternately, the check of block **132** may send a message to the lost or stolen device itself to determine whether or not the password is correct.

From block **132**, if the password is not correct the process proceeds to block **134** in which a check is made to determine whether the maximum number of re-tries has occurred. If the password prompt has been provided a certain number of times and has incorrectly been entered then, for security reasons, the process may end. Thus from block **134**, if the maximum number of tries has been reached, the process proceeds to block **136** and ends.

Conversely, if the maximum number of re-tries has not been reached, then the process proceeds from block **134** back to block **130** in which a password prompt is again provided.

If, in block **132**, it is determined that the password is correct then the process proceeds to block **140**. In block **140** a voicemail server or other telephone server may send a wipe request to a device or enterprise server to start the wipe process. Such wipe request could include information identifying the mobile device for which the wipe is to be performed, including the phone number for the mobile device, a PIN for the mobile device, or another phone number or identifier that may be associated with the mobile device.

The process then proceeds to block **142** in which the device or enterprise server sends the wipe or kill packet to the appropriate mobile device.

The process then proceeds to block **144** and ends.

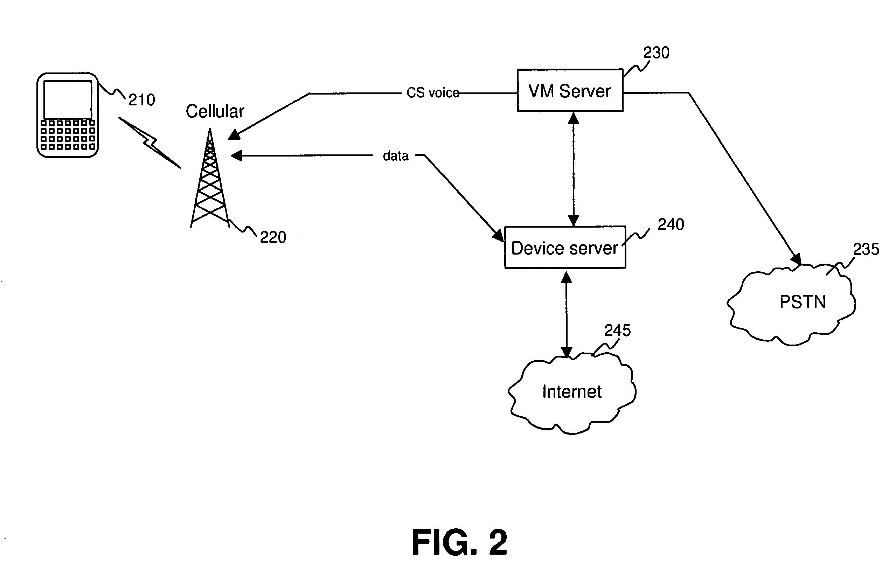

Reference is now made to **Figure 2**. **Figure 2** shows a simplified mobile architecture in which a carrier includes a device server to manage certain data on the mobile device. The device server may further be enabled to send a remote wipe or kill packet to the device to remotely wipe the device.

In the embodiment of **Figure 2**, a mobile device **210** communicates with a cellular network **220** to provide either voice or data services. Various cellular networks exist including, but not limited to, global system for mobile communications (GSM), general packet radio service (GPRS), co-division multiple access (CDMA), universal mobile telecommunication system (UMTS), wideband co-division multiple access (WCDMA), long term evolution (LTE), long term evolution - advanced (LTE_A), among others. These technologies allow the use of voice, data, or both.

A carrier or service provider may have various servers to serve mobile device **210**. For example, the carrier or service provider might administer a voicemail server **230** to provide voicemail services for mobile device **210**. Voicemail server **230** communicates with device **210** through cellular network **220** and may further communicate with a public switched telephone network (PSTN) **235** to communicate with other devices.

The carrier or service provider may also include a device server **240** that is used to provide data services to mobile device **210**. For example, device server **240** may be used to consolidate access to various email accounts for device **210** and may be used to provide a push email service to device **210** based on such email service consolidation.

In one embodiment, device server **240** may further include information such as a personal identification number (PIN) for the device. As such, device server **240** may be capable of sending a kill packet to remotely wipe device **210**. Device **210** will, in one embodiment, authenticate the kill packet and proceed to wipe the device in accordance with software on the device.

The device server **240** may communicate with the Internet **245** to provide data access over the Internet.

In one embodiment, the voicemail server **230** can further communicate with the device server **240**. In this way, the voicemail server **230** can, once the kill selection is selected and authenticated, send a command to device server **240**. Voicemail server **230** may be considered to be a trusted entity by device server **240** to provide security for the wipe command to ensure that such wipe command is authentic.

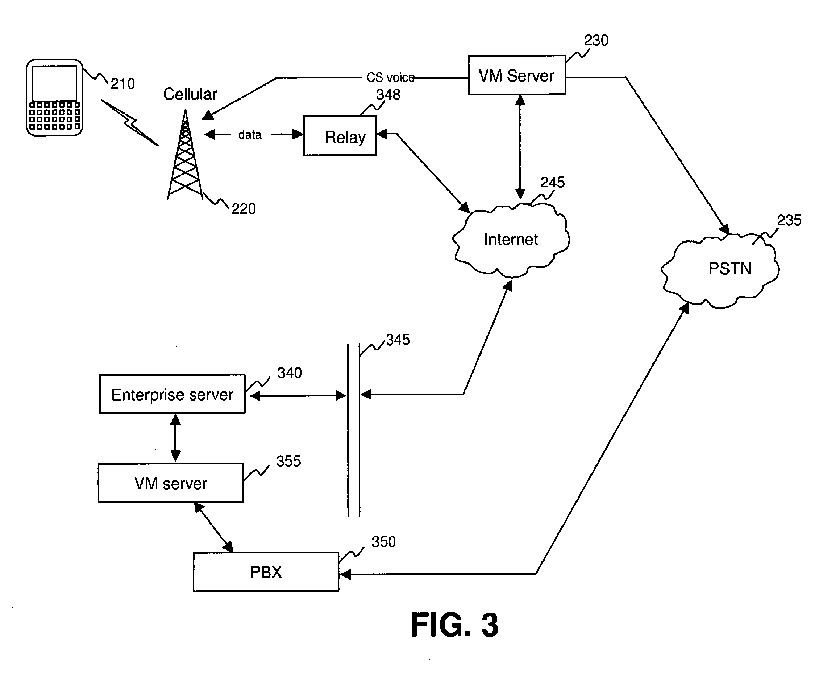

Reference is now made to **Figure 3**. **Figure 3** shows an alternative embodiment in which mobile device **210** communicates through a cellular network **220** with a carrier or service provider voicemail server **230.**

In the embodiment of **Figure 3**, the data for the device is managed through an enterprise server **340**. In this case, an enterprise server **340** may be behind a corporate firewall **345**. Data is routed through a relay **348**, through the Internet **245**, through the firewall **345** and to enterprise server 340.

Further, the enterprise may have a private branch exchange (PBX) **350** which operates the telephone system for the enterprise. The PBX may have an internal or external voicemail server **355** which may host the telephonic menu to select a remote wipe.

In the embodiment of **Figure 3**, various options are possible for providing a remote wipe to device **210**. In one embodiment, a user may dial the voicemail system for the mobile device. In this case, the user may access voicemail server **230** and proceed in accordance with the embodiment of **Figure 1**. However, in this case, voicemail server **230** must send a wipe command to enterprise server **340**. This may be done in some situations in which enterprise server **340** has granted a trusted entity status to voicemail server **230** to allow such remote wipe commands to be received from the voicemail server **230**, or through other handshaking techniques.

If, voicemail server **230** sends a remote wipe command through firewall **345** to enterprise server **340** and enterprise server **340** deems such message to be authentic, enterprise server **340** may then send the remote wipe command to mobile device **210**.

In an alternative embodiment, a user may access a voicemail server **355** through the PBX **350**. In this case, access may be granted, for example, by dialing the user's business telephone number and accessing the voicemail. The PBX **350** or voicemail server **355** may include a directory and may associate a mobile device with the voicemail for the enterprise. In this case, voicemail server **355** may be a trusted server for enterprise server **340** and thus once a remote wipe menu item has been selected and has been authenticated, voicemail server **355** may send the remote wipe command to enterprise server **340**, which can then send a kill packet to mobile device **210**. The above therefore provides for various options to use a voicemail system or other telephone menu system in order to provide for the remote wipe of a mobile device.

Voicemail servers **230** and **355**, device server **240** and enterprise server **340** typically will include a processor, communications subsystem and memory to provide the above functionality.

Further, voicemail servers **230** and **355** and PBX **350** are referred to herein individually or collectively as a telephonic server. Enterprise server **340** and device server **240** are referred to herein as a network server.

A Carrier Administered Device Example

The above embodiments may be illustrated using an example. In one scenario, a device has been lost at a restaurant. In this case, a restaurant's or a friend's phone may be used to access the device by dialing the number for the device and being prompted to leave a voicemail message. During the prompt, if the "*" key is pressed, a prompt to enter the password for the voicemail system is issued. The password is entered and the voicemail system provides a variety of voicemail options.

The voicemail options presented include listening to new messages, listening to saved messages, administering the voicemail box, among others. The menu prompt also includes the option to remotely wipe the device.

An appropriate key selection is received at the voicemail system to enter the remote wipe system. In one embodiment, this will then wipe the device. However, if additional security is provided entry of a password will be requested to remotely wipe the device.

The password may, for example, comprise a four digit code. The password may, for example, have previously been set when the device was configured or may be set on the device at some point.

If the verification password is verified, the voicemail server then will communicate with the device server or enterprise server in order to send the kill packet to the mobile device. The enterprise server or device server first authenticates that the voicemail server is valid and then sends the kill packet to the PIN for the device. Upon receiving such kill packet, the device recognizes that it is to wipe itself and proceeds to wipe all data and connections for the device, thereby removing any sensitive information or the capability to access any sensitive information.

In alternative embodiments, a text message may be used to provide for remote wiping, for example, by sending a text to the device with a kill code and authentication information.

### Enterprise Example

In an alternative embodiment, instead of dialing the voicemail for the device, a company phone number may be dialed to access the company voicemail system. This may be useful, for example, in cases where an enterprise server is administering the data and therefore the kill command for the mobile device. The enterprise server may trust the PBX or corporate voicemail server and it therefore may be more desirable for the IT department to allow the PBX/voicemail server to send such kill commands to the enterprise server.

Once the a voicemail system is accessed in a manner similar to the example above, and upon verification, the command to send a kill command is sent from the PBX to the enterprise server, which then verifies the command and sends the kill packet to the mobile device.

In both examples above, the numbers for a mobile device or enterprise or business are known to owner of the device and can therefore be used to easily access the menus and the option to remotely wipe the device. Further, telephones to access such voicemail systems are widely available and the user would be able to access a telephone relatively easily and quickly to provide such a remote wipe.

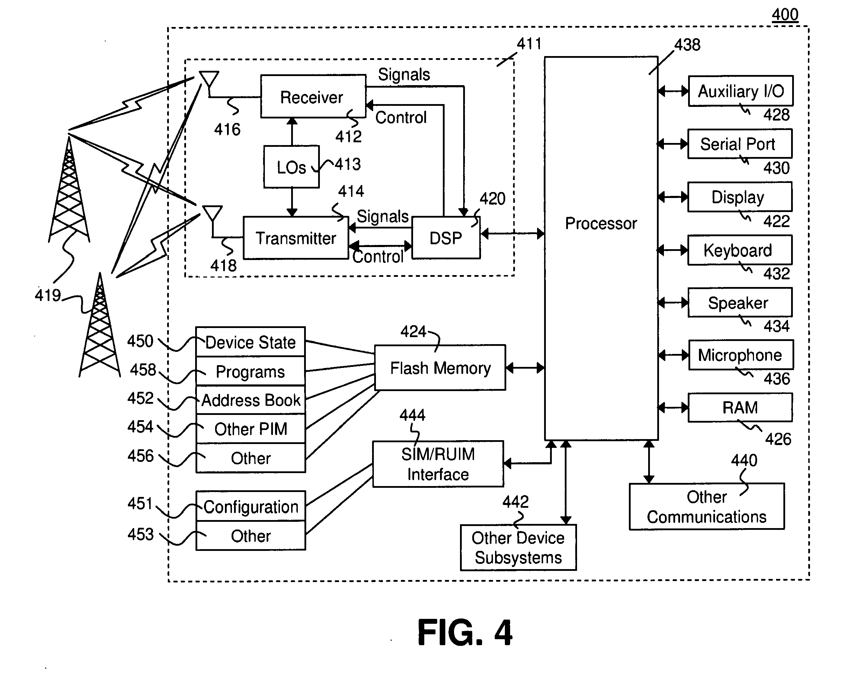

While the mobile device that receives the kill packet and performs the remote wipe may be any mobile device, one example mobile device is shown below with reference to **Figure 4**.

**Figure 4** shows a block diagram illustrating a mobile device capable of being used with various embodiments of the present disclosure. Mobile device **400** is generally a two-way wireless communication device having at least voice and data communication capabilities. Mobile device **400** may have the capability to communicate with other computer systems on the Internet. Depending on the exact functionality provided, the mobile device may be referred to as a smart phone, a data messaging device, a wireless e-mail device, a cellular telephone, a wireless Internet appliance, or a data communication device, as examples.

Where mobile device **400** is enabled for two-way communication, it will generally incorporate a communication subsystem **411**, including both a receiver **412** and a transmitter **414**, as well as associated components such as one or more, preferably embedded or internal, antenna elements **416** and **418**, local oscillators (LOs) **413**, and a processing module such as a digital signal processor (DSP) **420**. The particular design of the communication subsystem **411** will be dependent upon the communication network in which the device is intended to operate.

Network access requirements will also vary depending upon the type of network **419**. In some networks network access is associated with a subscriber or user of mobile device **400**. A mobile device may provide for a removable user identity module (RUIM) or a subscriber identity module (SIM) card in order to operate on a network. The SIM/RUIM interface **444** is normally similar to a card-slot into which a SIM/RUIM card can be inserted and ejected like a diskette or PCMCIA card. The SIM/RUIM card can have memory and hold key configuration **451**, and other information **453** such as identification, and subscriber related information.

When required network registration or activation procedures have been completed, mobile device **400** may send and receive communication signals over the network **419**. As illustrated in **Figure 4**, network **419** can comprise one or multiple base stations communicating with the mobile device in some embodiments.

Signals received by antenna **416** through communication network **419** are input to receiver **412**, which may perform such common receiver functions as signal amplification, frequency down conversion, filtering, channel selection and the like, and in the example system shown in **Figure 4**, analog to digital (A/D) conversion. A/D conversion of a received signal allows more complex communication functions such as demodulation and decoding to be performed in the DSP **420**. In a similar manner, signals to be transmitted are processed, including modulation and encoding for example, by DSP **420** and input to transmitter **414** for digital to analog conversion, frequency up conversion, filtering, amplification and transmission over the communication network **419** via antenna **418**. DSP **420** not only processes communication signals, but also provides for receiver and transmitter control. For example, the gains applied to communication signals in receiver **412** and transmitter **414** may be adaptively controlled through automatic gain control algorithms implemented in DSP **420**.

Mobile device **400** typically includes a processor or microprocessor **438** which controls the overall operation of the device. Communication functions, including at least data and voice communications, are performed through communication subsystem **411**. Processor or microprocessor **438** also interacts with further device subsystems such as the display **422**, flash memory **424**, random access memory (RAM) **426**, auxiliary input/output (I/O) subsystems **428**, serial port **430**, two or more keyboards or keypads **432**, speaker **434**, microphone **436**, other communication subsystem **440** such as a short-range communications subsystem or WiFi or WiMax communications and any other device subsystems generally designated as **442**. If other communications **440** are WiFi or WiMAX, the communications utilize a communication subsystem such as communication subsystem **411** to communicate with an access point **470**.

Some of the subsystems shown in **Figure 4** perform communication-related functions, whereas other subsystems may provide "resident" or on-device functions. Notably, some subsystems, such as keyboard **432** and display **422**, for example, may be used for both communication-related functions, such as entering a text message for transmission over a communication network, and device-resident functions such as a calculator or task list.

Operating system software used by the microprocessor **438** may be stored in a persistent store such as flash memory **424**, which may instead be a read-only memory (ROM) or similar storage element (not shown). The operating system, specific device applications, or parts thereof, may be temporarily loaded into a volatile memory such as RAM **426**. Received communication signals may also be stored in RAM **426**.

As shown, flash memory **424** can be segregated into different areas for both computer programs **458** and program data storage **450**, **452**, **454** and **456**. These different storage types indicate that each program can allocate a portion of flash memory **424** for their own data storage requirements. Microprocessor **438**, in addition to its operating system functions, may enable execution of software applications on the mobile device. A predetermined set of applications that control basic operations, including data and voice communication applications for example, can be installed on mobile device **400** during manufacturing.

One software application may be a personal information manager (PIM) application having the ability to organize and manage data items relating to the user of the mobile device such as, but not limited to, e-mail, calendar events, voice mails, appointments, and task items. One or more memory stores may be available on the mobile device to facilitate storage of PIM data items. Such PIM application may have the ability to send and receive data items, via the wireless network **419**. In one embodiment, the PIM data items are seamlessly integrated, synchronized and updated, via the wireless network **419** or access point **470**, with the mobile device user's corresponding data items stored or associated with a host computer system. Further applications may also be loaded onto the mobile device **400** through the network **419** or access point **470**, an auxiliary I/O subsystem **428**, serial port **430**, short-range communications subsystem **440** or any other suitable subsystem **442**, and installed by a user in the RAM **426** or a non-volatile store (not shown) for execution by the microprocessor **438**. Such flexibility in application installation increases the functionality of the device and may provide enhanced on-device functions, communication-related functions, or both.

In a data communication mode, a received signal such as a text message or web page download is processed by the communication subsystem **411** and input to the microprocessor **438**, which then further processes the received signal for output to the display **422**, or alternatively to an auxiliary I/O device **428**. Mobile device **400** may also be used to compose data items such as email messages for example, using the keyboard **432**, may be a complete alphanumeric keyboard or telephone-type keypad, in conjunction with the display **422** and possibly an auxiliary I/O device **428**. Such composed items may then be transmitted over a communication network through the communication subsystem **411**.

For voice communications, overall operation of mobile device **400** is similar, except that received signals would be generally output to a speaker **434** and signals for transmission would be generated by a microphone **436**. Alternative voice or audio I/O subsystems, such as a voice message recording subsystem, may also be implemented on mobile device **400.** Although voice or audio signal output is usually accomplished primarily through the speaker **434**, display **422** may also be used to provide an indication of the identity of a calling party, the duration of a voice call, or other voice call related information for example.

Serial port **430** in **Figure 4**, may be implemented in a personal digital assistant (PDA)-type mobile device for which synchronization with a user's desktop computer (not shown). Such a port **430** would enable a user to set preferences through an external device or software application and would extend the capabilities of mobile device **400** by providing for information or software downloads to mobile device **400** other than through a wireless communication network. The alternate download path may for example be used to load an encryption key onto the device through a direct and thus reliable and trusted connection to thereby enable secure device communication. Serial port **430** can further be used to connect the mobile device to a computer to act as a modem or for charging.

Other communications subsystems **440**, such as a short-range communications subsystem, is a further optional component which may provide for communication between mobile device **400** and different systems or devices, which need not necessarily be similar devices. For example, the subsystem **440** may include an infrared device and associated circuits and components or a Bluetooth™ communication module to provide for communication with similarly enabled systems and devices or a radio frequency identifier (RFID) or near field communications (NFC) communication module, etc.

Thus, mobile device **400** can implement the wipe process when a kill packet is received over communications subsystem **411** by using processor **438**. Code for the wipe functionality may be store in memory on the device.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for remotely wiping a mobile device (210) comprising:
receiving, at a telephonic server hosting a telephonic menu, a selection to wipe data and connections from the mobile device; and
forwarding a wipe data request to a network server (240) to send a wipe command;
wherein the telephony server comprises at least one of a voice mail server (230) accessible by a phone number of the mobile device, or a private branch exchange (350) accessible by a different phone number.

2. The method of claim 1, further comprising a password verification for remotely wiping the mobile device (210) prior to the forwarding.

3. The method of claim 2, wherein the password verification utilizes a password stored on the telephonic server.

4. The method of claim 2, wherein the password verification utilizes a password stored on the mobile device (210).

5. The method of any one of claims 1 to 4, wherein the telephonic server comprises the voicemail server (230) and the voicemail server (230) is hosted by a carrier or service provider.

6. The method of any one of claims 1 to 4, wherein the telephonic server comprises the private branch exchange (350) and the private branch exchange (350) is hosted by an enterprise.

7. The method of any one of claims 1 to 6, wherein the network server (240) comprises a device server hosted by a carrier or service provider.

8. The method of any one of claims 1 to 6, wherein the network server (240) comprises an enterprise server (340).

9. The method of any one of claims 1 to 8, wherein the telephonic server is trusted by the network server (240).

10. The method of any one of claims 1 to 9, wherein the different phone number is a corporate number associated with a user of the mobile device.

11. A system for remotely wiping a mobile device (210) comprising:
a network server (240); and
a telephonic server adapted to perform the method of any one of claims 1 to 10.

12. A telephonic server configured to perform the method of any one of claims 1 to 10.

## Patentansprüche

1. Ein Verfahren zum Löschen einer mobilen Vorrichtung (210) aus der Ferne, das aufweist:
Empfangen, an einem Telefonie-Server, der ein telefonisches Menü hostet,
einer Auswahl zum Löschen von Daten und Verbindungen von der mobilen Vorrichtung; und
Weiterleiten einer Daten-Löschen-Anforderung an einen Netzwerkserver (240) zum Senden eines Löschen-Befehls;
wobei der Telefonie-Server zumindest eines aus einem Voicemail-Server (230), auf den über eine Telefonnummer der mobilen Vorrichtung zugegriffen werden kann, oder einer Nebenstellenanlage (350) aufweist, auf die über eine andere Telefonnummer zugegriffen werden kann.

2. Das Verfahren gemäß Anspruch 1, das weiter eine Passwortverifizierung aufweist zum Löschen der mobilen Vorrichtung (210) aus der Ferne vor dem Weiterleiten.

3. Das Verfahren gemäß Anspruch 2, wobei die Passwortverifizierung ein Passwort verwendet, das auf dem Telefonie-Server gespeichert ist.

4. Das Verfahren gemäß Anspruch 2, wobei die Passwortverifizierung ein Passwort verwendet, das auf der mobilen Vorrichtung (210) gespeichert ist.

5. Das Verfahren gemäß einem der Ansprüche 1 bis 4, wobei der Telefonie-Server den Voicemail-Server (230) aufweist und der Voicemail-Server (230) durch einen Carrier oder Dienste-Anbieter gehostet wird.

6. Das Verfahren gemäß einem der Ansprüche 1 bis 4, wobei der Telefonie-Server die Nebenstellenanlage (350) aufweist und die Nebenstellenanlage (350) durch ein Unternehmen gehostet wird.

7. Das Verfahren gemäß einem der Ansprüche 1 bis 6, wobei der Netzwerkserver (240) einen Vorrichtungsserver aufweist, der durch einen Carrier oder Dienste-Anbieter gehostet wird.

8. Das Verfahren gemäß einem der Ansprüche 1 bis 6, wobei die Netzwerkserver (240) einen Unternehmens-Server (340) aufweist.

9. Das Verfahren gemäß einem der Ansprüche 1 bis 8, wobei dem Telefonie-Server von dem Netzwerkserver (240) vertraut wird.

10. Das Verfahren gemäß einem der Ansprüche 1 bis 9, wobei die andere Telefonnummer eine Firmennummer ist, die mit einem Benutzer der mobilen Vorrichtung assoziiert ist.

11. Ein System zum Löschen einer mobilen Vorrichtung (210) aus der Ferne, das aufweist:
einen Netzwerkserver (240); und
einen Telefonie-Server, der ausgebildet ist zum Durchführen des Verfahrens gemäß einem der Ansprüche 1 bis 10.

12. Ein Telefonie-Server, der konfiguriert ist zum Durchführen des Verfahrens gemäß einem der Ansprüche 1 bis 10.

## Revendications

1. Procédé d'effacement à distance d'un dispositif mobile (210), comprenant les étapes consistant à :
recevoir, sur un serveur téléphonique hébergeant un menu téléphonique, une sélection d'effacement des données et connexions sur le dispositif mobile ; et
acheminer une demande d'effacement de données vers un serveur de réseau (240) afin qu'il envoie une instruction d'effacement ;
dans lequel le serveur téléphonique comprend au moins un serveur de messagerie vocale (230) accessible par un numéro de téléphone du dispositif mobile ou un commutateur privé (350) accessible à l'aide d'un numéro de téléphone différent.

2. Procédé selon la revendication 1, comprenant en outre, avant l'étape d'acheminement, une vérification par mot de passe pour l'effacement à distance du dispositif mobile (210).

3. Procédé selon la revendication 2, dans lequel la vérification par mot de passe utilise un mot de passe stocké sur le serveur téléphonique.

4. Procédé selon la revendication 2, dans lequel la vérification par mot de passe utilise un mot de passe stocké sur le dispositif mobile (210).

5. Procédé selon l'une quelconque des revendications 1 à 4, dans lequel le serveur téléphonique comprend le serveur de messagerie vocale (230) et le serveur de messagerie vocale (230) est hébergé par un opérateur ou un fournisseur de services.

6. Procédé selon l'une quelconque des revendications 1 à 4, dans lequel le serveur téléphonique comprend le commutateur privé (350) et le commutateur privé (350) est hébergé par une entreprise.

7. Procédé selon l'une quelconque des revendications 1 à 6, dans lequel le serveur de réseau (240) comprend un serveur de dispositifs hébergé par un opérateur ou un fournisseur de services.

8. Procédé selon l'une quelconque des revendications 1 à 6, dans lequel le serveur de réseau (240) comprend un serveur d'entreprise (340).

9. Procédé selon l'une quelconque des revendications 1 à 8, dans lequel le serveur téléphonique bénéficie de la confiance du serveur de réseau (240).

10. Procédé selon l'une quelconque des revendications 1 à 9, dans lequel le numéro de téléphone différent est un numéro d'entreprise associé à un utilisateur du dispositif mobile.

11. Système d'effacement à distance d'un dispositif mobile (210) comprenant :
un serveur de réseau (240) ; et
un serveur téléphonique conçu pour mettre en oeuvre le procédé selon l'une quelconque des revendications 1 à 10.

12. Serveur téléphonique configuré pour mettre en oeuvre le procédé selon l'une quelconque des revendications 1 à 10.
